# EUROPEAN PATENT APPLICATION

(11) **EP 4 734 321 A1**
(43) Date of publication of application: **29.04.2026**
(21) Application number: 24830381.0
(22) Date of filing: 30.05.2024
(51) Int. Cl.: H02J 7/00

(54) **ACTIVE EQUALIZATION DEVICE AND METHOD FOR BATTERY PACKS, AND SERIAL BATTERY PACK SYSTEM**

(30) Priority: 25.06.2023 CN 202310754285
(71) Applicant: Solax Power Network Technology (Zhejiang) Co., Ltd., Zhejiang 311599 (CN)
(72) Inventor: YANG, Xingxing, Hangzhou, Zhejiang 311599 (CN); SONG, Su, Hangzhou, Zhejiang 311599 (CN)
(74) Representative: Berggren Oy
(86) International application number: PCT/CN2024/096402
(87) International publication number: WO 2025/001734

(57) **Abstract**

The present application provides a battery pack active balancing device, method, and battery pack series connection system. The battery pack active balancing device includes a plurality of cell balancing units, each including a first power deriving port, through which power is supplied from a total voltage port of series-connected battery packs to charge battery cells therein; a plurality of first communication units each configured to transmit a power deriving instruction sent from the master control unit to a corresponding one of the cell balancing units through the balancing circuit connection port; a master control unit, communicatively connected to the first communication units, and including a power supply module configured to supply power from the total voltage port of the series-connected battery packs to the cell balancing units through the first power deriving ports. According to the present application, energy conversion is used for the active balancing of the battery packs.

## Description

### CROSS-REFERENCE TO RELATED APPLICATION

This application claims priority to and the benefit of Chinese Patent Application No. 202310754285.7, filed on June 27, 2023, entitled "Battery Pack Active Balancing Device, Method, and Battery Pack Series Connection System", the disclosure of which is incorporated herein by reference in its entirety.

### TECHNICAL FIELD

The present application relates to the technical field of battery balancing, and in particular to a battery pack active balancing device, method, and battery pack series connection system.

### BACKGROUND

When lithium batteries are used in series, there are differences in the internal resistance and capacity of each cell, as well as in self-power consumption. After a use for a period of time, the capacity of each cell in the lithium battery will be inconsistent, and the differences will become larger and larger, eventually resulting in a short-board effect. The capacity of the entire lithium battery is determined by the cell with the smallest capacity, resulting in a short overall life of the lithium battery.

Passive balancing is common in balancing technology, which is a method of releasing energy from higher voltage cells through resistors. This is technically simple, but releasing energy through resistors causes energy waste. This method also generates a lot of heat and requires heat dissipation. Therefore, additional heat dissipation technology is required. Moreover, this method results in a small balancing current and a long balancing time.

The common balancing technology currently used is that the capacity of the entire battery pack depends on the smallest cell. For a parallel system, each battery pack only needs to achieve internal active balancing. However, for a series system, not only must all cells within the battery pack be balanced, but the battery packs must also be balanced and consistent. There is currently no simple solution to keep the battery packs in a series system consistent.

### SUMMARY

The present application aims at the shortcomings of the prior art and provides a battery pack active balancing device, method, and battery pack series connection system.

In a first aspect, the present application provides a battery pack active balancing device, including a master control unit, a plurality of first communication units and a plurality of cell balancing units, wherein
the plurality of first communication units each include a cell information collection port, a balancing circuit connection port, and a master control unit connection port, wherein the plurality of first communication units each are configured to collect cell information through the cell information collection port and transmit the cell information to the master control unit through the master control unit connection port, and the plurality of first communication units each are configured to transmit a power deriving instruction sent from the master control unit to a corresponding one of the plurality of cell balancing units through the balancing circuit connection port;
the plurality of cell balancing units each include a first power deriving port, through which power is derived from a total voltage port of series-connected battery packs to charge one or more battery cells therein;
the master control unit is communicatively connected to the plurality of first communication units, wherein the master control unit includes a power supply module configured to derive power from the total voltage port of the series-connected battery packs to supply the power to one or more of the plurality of cell balancing units through the one or more first power deriving ports thereof.

In an embodiment, the master control unit further includes a control module and a second communication unit, wherein:
the power supply module is electrically connected to the control module;
the control module is connected to the second communication unit, the second communication unit is connected to the plurality of first communication units, and the control module is configured to communicate with the plurality of cell balancing units and the corresponding battery cells through the plurality of first communication units and the second communication unit.

In an embodiment, the plurality of first communication units each include a battery information acquisition module and a power deriving instruction sending module, wherein:
the battery information acquisition module is configured to collect information about a single one of the battery packs and information about each battery cell in the battery pack;
the power deriving instruction sending module is connected to the corresponding one of the plurality of cell balancing units and is configured to send the power deriving instruction to the cell balancing unit; the power deriving instruction includes information of battery pack and information of the battery cells in the battery pack that need to be charged.

In an embodiment, the master control unit further includes a master control isolation module connected to the power supply module and the first power deriving ports of the plurality of cell balancing units.

In an embodiment, the plurality of cell balancing units each include a slave isolation module and a cell balancing circuit connected thereto, wherein the slave isolation module is connected to the corresponding first power deriving port so as to supply power from the total voltage port of the series-connected battery packs through the first power deriving port.

In an embodiment, the power supply module further includes a voltage dropping module including a second power deriving port configured to derive power from the total voltage port of the series-connected battery packs.

In a second aspect, the present application provides a battery pack active balancing method, using the above battery pack active balancing device,
wherein the method includes:
Step 10, obtaining, by the master control unit, battery information through the plurality of first communication units;
Step 20, determining, by the master control unit, whether a cell balancing condition is met based on the battery information; if so, feeding back a power deriving instruction to the plurality of cell balancing units; if not, waiting to receive new battery information; and
Step 30, deriving, by the plurality of cell balancing units, power from the total voltage port of the series-connected battery packs through the first power deriving ports to charge the corresponding battery cells that meet the cell balancing condition after receiving the power deriving instruction.

In an embodiment, the Step 20 further includes:
Step 21, feeding back, by the master control unit, the power deriving instruction to a corresponding one of the plurality of cell balancing unit when a voltage difference between a lowest voltage and a highest voltage of the battery packs in the battery information currently obtained by the master control unit is greater than a threshold; wherein the power deriving instruction includes the information of battery pack and the information of the battery cells in the battery pack;
Step 22, deriving, by one of the plurality of cell balancing units corresponding to one of the battery packs having a lowest voltage, power through the corresponding first power deriving port to one of the battery cells having a lowest voltage in the battery pack according to the power deriving instruction to charge the battery cell until all the battery cells in the battery pack are balanced; and
Step 23, waiting, by the master control unit, to receive the new battery information after the balancing for all the battery cells of the battery pack is complete, and then repeating Steps 21-22 until the voltage difference between the lowest voltage and the highest voltage of the battery packs is less than or equal to the threshold.

In an embodiment, the battery information includes voltage information and battery pack number information of each of the series-connected battery packs, and voltage information and battery cell number of each of the battery cells in each of the battery packs.

In a third aspect, the present application provides a battery pack series connection system, including a plurality of series-connected battery packs and the above battery pack active balancing device;
wherein the battery pack series connection system further includes the total voltage port electrically connected to the plurality of the series-connected battery packs and configured to output a total voltage of the series-connected battery packs;
wherein each of the battery packs includes a plurality of battery cells connected in series, wherein each of the battery cells is electrically connected to a corresponding one of the plurality of cell balancing units, and the plurality of cell balancing units are electrically connected to the total voltage port; each of the battery cells is communicatively connected to the master control unit via a corresponding one of the plurality of first communication units.

Beneficial effects of the present application:
The solution proposed by the present application is to realize the balancing process of the battery packs by active balancing, which is achieved by providing a voltage bus and transferring the electric energy instead of consuming it. The energy of the higher capacity battery cell is transferred to the lower capacity battery cell, so as to realize the full utilization of battery cells of the battery packs and solve the short-board effect.

### BRIEF DESCRIPTION OF THE DRAWINGS

In order to more clearly illustrate the embodiments of the present application or the technical solutions in the prior art, the drawings required for use in the embodiments or the description of the prior art will be briefly introduced below. Obviously, the drawings described below are only some embodiments of the present application. For those skilled in the art, other drawings can be obtained based on these drawings without creative work.

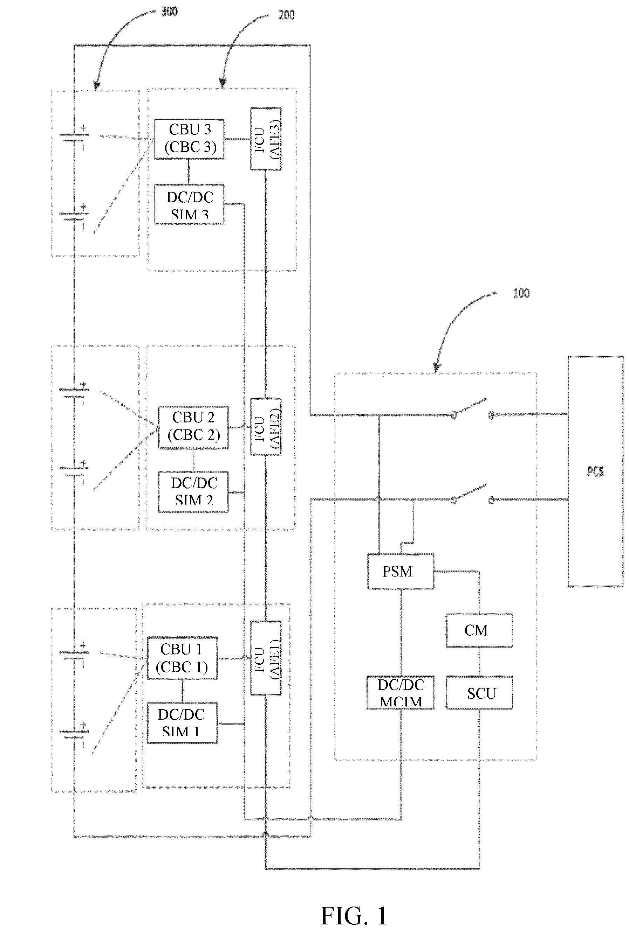

FIG. 1 is a schematic diagram of an active balancing device for a series-connected battery pack according to an embodiment of the present application.

### DETAILED DESCRIPTION

The specific implementation of the present application is further described in detail below in conjunction with the accompanying drawings and examples. The following examples are used to illustrate the present application, but are not intended to limit the scope of the present application.

The terms "first" and "second" and the like in the specification and claims of the present application and the drawings are used to distinguish different objects, rather than to describe a specific order. In addition, the terms "including" and "having" and any variations thereof are intended to cover non-exclusive inclusions. For example, a process, method, system, product or device including a series of steps or units is not limited to the listed steps or units, but may optionally include steps or units not listed, or may optionally include other steps or units inherent to these processes, methods, products or devices.

Reference to "embodiments" herein means that a particular feature, structure, or characteristic described in conjunction with the embodiments may be included in at least one embodiment of the present application. The appearance of the phrase in various locations in the specification does not necessarily refer to the same embodiment, nor is it an independent or alternative embodiment that is mutually exclusive with other embodiments. It is explicitly and implicitly understood by those skilled in the art that the embodiments described herein may be combined with other embodiments.

### Embodiment 1

The embodiment provides a battery pack active balancing device, including a master control unit, a plurality of first communication units (FCU) and a plurality of cell balancing units (CBU).

The first communication units each include a cell information collection port (CICP), a balancing circuit connection port (BCCP), and a master control unit connection port (MCUCP). The first communication units each are configured to collect cell information through the cell information collection port and transmit the cell information to the master control unit through the master control unit connection port. In addition, the first communication units are further configured to transmit a power deriving instruction sent from the master control unit to a corresponding cell balancing unit through the balancing circuit connection port.

The cell balancing units each include a first power deriving port (FPSP), through which power is derived from the total voltage port (TVP) of the series-connected battery packs to charge one or more battery cells therein. Specifically, the cell balancing units each include a cell balancing circuit (CBC), on which the first power deriving port is provided.

The master control unit is communicatively connected to the first communication units, and the master control unit includes a power supply module (PSM) configured to supply power from the total voltage port of the series-connected battery packs to the cell balancing units through the first power deriving ports thereof.

The battery information includes the voltage information and the information about battery pack number of each of the series-connected battery packs, and the voltage information and the battery cell number information of battery cells in each battery pack.

According to the present application, electric energy conversion is used for the balancing. In this case, power is derived from the total voltage port of the series-connected battery packs, the energy of the high-capacity battery cells can be transferred to the low-capacity battery cells so as to achieve full utilization of the battery cells in the battery packs.

Furthermore, the master control unit also includes a control module and a second communication unit.

The power supply module is electrically connected to the control module.

The control module is connected to the second communication unit. The second communication unit is connected to the first communication units. The control module is configured to communicate with the cell balancing units and the cells through the first communication units and the second communication unit.

Furthermore, the first communication units each include a battery information acquisition module (BIAM) and a power deriving instruction sending module (PSISM). The battery information acquisition module is configured to collect information of a single battery pack and information of each battery cell in the battery pack. The power deriving instruction sending module is connected to the corresponding cell balancing unit, and is configured to send the power deriving instruction to the cell balancing unit. The power deriving instruction includes the information of battery pack and information of battery cells that need to be charged in the battery pack.

In order to ensure stable charging, the master control unit further includes a master control isolation module (MCIM) connected to the power supply module and the first power deriving ports of the cell balancing units.

In other embodiments, the cell balancing units each include a cell balancing circuit and a slave isolation module (SIM) provided with a first power deriving port configured to supply power from the total voltage port. It can be seen that the first power deriving port is the main port for power supply from the total voltage port, and its location depends on the specific internal structure of the cell balancing unit. If the slave isolation module is not provided according to an embodiment, the first power deriving port is provided on the cell balancing circuit. If the slave isolation module is provided according to an embodiment, the first power deriving port is provided on the slave isolation module.

Referring to FIG. 1, the battery pack active balancing device can be divided into a master control unit 100 and a plurality of slave control units 200. The master control unit 100 includes a power supply module, a control module (CM), a second communication unit (SCU), and a DC/DC master control isolation module. The power supply module includes a voltage dropping module (VDM), which includes a second power deriving port (SPSP) configured to derive power from the total voltage port of the series-connected battery packs.

The plurality of slave control units 200 are connected to a plurality of battery packs 300. The "battery pack" in this embodiment includes a plurality of battery cells connected in series. Each of the battery packs 300 is connected to one of the slave control units. Each slave control unit 200 includes a first communication unit, a cell balancing unit, and a DC/DC slave isolation module. The cell balancing unit is connected to each battery cell in the battery pack 300. The cell balancing unit includes a voltage balancing selection circuit configured to select different battery cells to charge through a switch circuit. The cell balancing unit is connected to the total voltage port of the series-connected battery packs through a DC/DC slave isolation module to ensure stable voltage input.

### Embodiment 2

Based on the battery pack active balancing device mentioned in Embodiment 1, the present embodiment provides a battery pack active balancing method, including the following steps:
Step 10, obtaining, by the master control unit, battery information through the plurality of first communication units;
Step 20, determining, by the master control unit, whether a cell balancing condition is met based on the battery information; if so, feeding back a power deriving instruction to the plurality of cell balancing units; if not, waiting to receive new battery information; and
Step 30, deriving, by the plurality of cell balancing units, power from the total voltage port of the series-connected battery packs through the first power deriving ports to charge the corresponding battery cells that meet the cell balancing condition after receiving the power deriving instruction.

A selectable charging mode is further provided to achieve voltage balancing of each one of the series-connected battery packs, as well as voltage balancing of each battery cell in each battery pack, as follows.

The Step 20 further includes:
Step 21, feeding back, by the master control unit, the power deriving instruction to a corresponding one of the plurality of cell balancing unit when a voltage difference between a lowest voltage and a highest voltage of the battery packs in the battery information currently obtained by the master control unit is greater than a threshold; wherein the power deriving instruction includes the information of battery pack and the information of the battery cells in the battery pack;
Step 22, deriving, by one of the plurality of cell balancing units corresponding to one of the battery packs having a lowest voltage, power through the corresponding first power deriving port to one of the battery cells having a lowest voltage in the battery pack according to the power deriving instruction to charge the battery cell until all the battery cells in the battery pack are balanced; and
Step 23, waiting, by the master control unit, to receive the new battery information after the balancing for all the battery cells of the battery pack is complete, and then repeating Steps 21-22 until the voltage difference between the lowest voltage and the highest voltage of the battery packs is less than or equal to the threshold.

For example, there are N series-connected battery packs S1-Sn. Each battery pack includes a plurality of battery cells. The number of the battery cells in each battery pack is not limited and can be the same or different.

The battery information of each battery pack is collected in real time at the corresponding first communication unit. When the difference between the lowest and highest voltage of the N battery packs are greater than a threshold, the battery cell having the lowest voltage in the corresponding battery pack (S1) is charged. First, a continuous charging process for the battery pack S1 is complete to make each battery cell inside consistent, and then the voltage information of the battery packs S1-Sn are continued to be compared. If the battery pack S3 is the lowest in voltage at this time, the voltage of each battery cell in the battery pack S3 is balanced according to the above method until the voltage differences of all battery packs collected by the first communication units are less than or equal to the threshold, and then the balancing is terminated.

The battery information includes the voltage information and the battery pack number information of each battery pack, as well as the voltage information and the battery cell number information of each battery cell in each battery pack. After the battery information is fed back to the master control unit, the voltage difference of the battery packs and the voltage difference of the battery cells in a battery pack can be determined based on the voltage information and battery pack number information of each battery pack, as well as the voltage information and battery cell number information of each battery cells in each battery pack. Then, the innovative balancing cycle logic is used to achieve the balance and consistency of all the battery cells in the battery pack, and the balance and consistency between battery packs.

### Embodiment 3

The present embodiment provides a battery pack series connection system includes a plurality of battery packs 300 connected in series and the battery pack active balancing device in Embodiment 1.

The battery pack series connection system also includes a total voltage port, which is electrically connected to the plurality of battery packs connected in series and is configured to output the total voltage of the battery packs connected in series. Each of the battery packs includes a plurality of battery cells connected in series. Each of the battery cells is electrically connected to the corresponding cell balancing unit. The cell balancing units are electrically connected to the total voltage port. The battery cells are communicatively connected to the master control unit via the corresponding first communication unit.

The battery information acquisition module and the power deriving instruction sending module may be each implemented as an analog front-end (AFE) collector, which integrates functions for acquisition and instruction.

In actual production, the battery packs and the battery pack active balancing device can be produced separately, and then interfaces can be provided and configured to directly connect the two electrically to complete the assembly of an overall product.

The specific embodiments described above further illustrate the purpose, technical solutions and beneficial effects of the present application. It should be understood that the above description is only a specific embodiment of the present application and is not intended to limit the scope of protection of the present application. It is particularly pointed out that for those skilled in the art, any modification, equivalent replacement, improvement, etc. made within the spirit and principle of the present application should be included in the scope of protection of the present application.

## Claims

1. A battery pack active balancing device, **characterized by** comprising a master control unit, a plurality of first communication units and a plurality of cell balancing units; wherein
the plurality of first communication units each comprise a cell information collection port, a balancing circuit connection port, and a master control unit connection port, wherein the plurality of first communication units each are configured to collect cell information through the cell information collection port and transmit the cell information to the master control unit through the master control unit connection port, and the plurality of first communication units each are configured to transmit a power deriving instruction sent from the master control unit to a corresponding one of the plurality of cell balancing units through the balancing circuit connection port;
the plurality of cell balancing units each comprise a first power deriving port, through which power is derived from a total voltage port of series-connected battery packs to charge one or more battery cells therein;
the master control unit is communicatively connected to the plurality of first communication units, wherein the master control unit comprises a power supply module configured to derive power from the total voltage port of the series-connected battery packs to supply the power to one or more of the plurality of cell balancing units through the one or more first power deriving ports thereof.

2. The battery pack active balancing device according to claim 1, **characterized in that** the master control unit further comprises a control module and a second communication unit, wherein:
the power supply module is electrically connected to the control module;
the control module is connected to the second communication unit, the second communication unit is connected to the plurality of first communication units, and the control module is configured to communicate with the plurality of cell balancing units and the corresponding battery cells through the plurality of first communication units and the second communication unit.

3. The battery pack active balancing device according to claim 1, **characterized in that** the plurality of first communication units each comprise a battery information acquisition module and a power deriving instruction sending module, wherein:
the battery information acquisition module is configured to collect information about a single one of the battery packs and information about each battery cell in the battery pack;
the power deriving instruction sending module is connected to the corresponding one of the plurality of cell balancing units and is configured to send the power deriving instruction to the cell balancing unit; the power deriving instruction comprises information of battery pack and information of the battery cells in the battery pack that need to be charged.

4. The battery pack active balancing device according to any one of claims 1-3, **characterized in that** the master control unit further comprises a master control isolation module connected to the power supply module and the first power deriving ports of the plurality of cell balancing units.

5. The battery pack active balancing device according to any one of claims 1-3, **characterized in that** the plurality of cell balancing units each comprise a slave isolation module and a cell balancing circuit connected thereto, wherein the slave isolation module is connected to the corresponding first power deriving port so as to supply power from the total voltage port of the series-connected battery packs through the first power deriving port.

6. The battery pack active balancing device according to any one of claims 1-3, **characterized in that** the power supply module further comprises a voltage dropping module comprising a second power deriving port configured to derive power from the total voltage port of the series-connected battery packs.

7. A battery pack active balancing method, **characterized by** using the battery pack active balancing device according to any one of claims 1-6,
wherein the method comprises:
Step 10, obtaining, by the master control unit, battery information through the plurality of first communication units;
Step 20, determining, by the master control unit, whether a cell balancing condition is met based on the battery information; if so, feeding back a power deriving instruction to the plurality of cell balancing units; if not, waiting to receive new battery information; and
Step 30, deriving, by the plurality of cell balancing units, power from the total voltage port of the series-connected battery packs through the first power deriving ports to charge the corresponding battery cells that meet the cell balancing condition after receiving the power deriving instruction.

8. The battery pack active balancing method according to claim 7, **characterized in that** the Step 20 further comprises:
Step 21, feeding back, by the master control unit, the power deriving instruction to a corresponding one of the plurality of cell balancing unit when a voltage difference between a lowest voltage and a highest voltage of the battery packs in the battery information currently obtained by the master control unit is greater than a threshold; wherein the power deriving instruction comprises the information of battery pack and the information of the battery cells in the battery pack;
Step 22, deriving, by one of the plurality of cell balancing units corresponding to one of the battery packs having a lowest voltage, power through the corresponding first power deriving port to one of the battery cells having a lowest voltage in the battery pack according to the power deriving instruction to charge the battery cell until all the battery cells in the battery pack are balanced; and
Step 23, waiting, by the master control unit, to receive the new battery information after the balancing for all the battery cells of the battery pack is complete, and then repeating Steps 21-22 until the voltage difference between the lowest voltage and the highest voltage of the battery packs is less than or equal to the threshold.

9. The battery pack active balancing method according to claim 7 or 8, **characterized in that** the battery information comprises voltage information and battery pack number information of each of the series-connected battery packs, and voltage information and battery cell number of each of the battery cells in each of the battery packs.

10. A battery pack series connection system, **characterized by** comprising a plurality of series-connected battery packs and the battery pack active balancing device according to any one of claims 1-6;
wherein the battery pack series connection system further comprises the total voltage port electrically connected to the plurality of the series-connected battery packs and configured to output a total voltage of the series-connected battery packs;
wherein each of the battery packs comprises a plurality of battery cells connected in series, wherein each of the battery cells is electrically connected to a corresponding one of the plurality of cell balancing units, and the plurality of cell balancing units are electrically connected to the total voltage port; each of the battery cells is communicatively connected to the master control unit via a corresponding one of the plurality of first communication units.
